# EUROPEAN PATENT SPECIFICATION

(11) **EP 3 356 055 B1**
(45) Date of publication and mention of the grant of the patent: **28.10.2020**
(21) Application number: 16852174.8
(22) Date of filing: 21.09.2016
(51) Int. Cl.: B05B 16/20, B05B 16/60, B08B 15/02, F24F 7/00, B08B 15/00, F24F 7/02

(54) **WORK BOOTH SAFETY SYSTEM FOR AN AUTOMOTIVE BODY REPAIR SHOP**
ARBEITSKABINENSICHERHEITSSYSTEM FÜR EINE AUTOMOBILKAROSSERIEREPARATURWERKSTATT
SYSTÈME DE SÉCURITÉ DE CABINE DE TRAVAIL POUR ATELIER DE RÉPARATION DE CARROSSERIE AUTOMOBILE

(30) Priority: 29.09.2015 SE 1530144
(43) Date of publication of application: 08.08.2018
(73) Proprietor: Pivab AB, 432 67 Veddige (SE)
(72) Inventor: PIHLBLAD, Ronny, 432 66 Veddige (SE)
(74) Representative: Bergquist, Kjell Gunnar
(86) International application number: PCT/SE2016/050885
(87) International publication number: WO 2017/058075

(56) References cited:
- WO-A1-98/35195
- WO-A1-2012/085535
- WO-A1-2013/023870
- WO-A1-2013/117882
- US-A- 5 473 844
- US-A1- 2009 203 306

## Description

### TECHNICAL FIELD

The invention relates to a work booth safety system for an automotive body repair shop including work booth with a ventilation system for evacuation of polluted air and an entrance arranged to be selectively closed or opened by means of a door or drape.

### BACKGROUND

In an automotive body repair shop, a car body with minor body damages is normally repaired in several steps, such as preparative work where dents and other body damages are initially straightened out and prepared before later spray application of a body sanding foundation, welding and final repainting in a paint booth. Typically, the different work steps or work stations before final repainting are carried out in separate locations within the repair shop or at separate distant locations outside of the body repair shop itself. In the latter case, valuable time is lost due to transport logistics. Very often, welding repair work is carried out with insufficient ventilation and not in a separated environment from the general area in the body repair shop. This means that staff working at the repair shop is indirectly subjected to health-endangering welding fumes which in the long run may seriously impair the general health status of the staff. Furthermore, in many workshops there is a risk of explosion when using flammable gases from the application of a body sanding foundation at the same time as a welding operation.

An example of a spray, working booth for automotive repair shops is shown in the patent document WO98/35195. The patent document '35195 deals with the problem of quickly drying water-borne paints. According to the document, this is done by having a booth with an enclosure and equipment for generating an air flow through the enclosure, the booth also being equipped with an air inlet receiving air from the atmosphere externally, heating means for such air and an inlet directing this air into the enclosure, transversely to said air flow.

An example of a ventilation work booth for working on a vehicle equipped with components with possible leaks of inflammable gases, e.g. a fuel cell, is shown in the patent document US2009/203306. The booth design according to '203306 is directed to the problem of taking care of inflammable gases like hydrogen and exhaust gases in a room enclosed by walls. The arrangement includes means for supplying a diluent gas to the arranging space and discharging the inflammable gas from the arranging space.

None of the two here mentioned documents thus discloses a safety system for a work booth with the work booth being arranged to be selectively configured into three different working modes with different settings for pressurized air supply, electrical power supply and ventilation

Hence, there are both potential health problems and logistical problems associated with automotive repair shops.

### SUMMARY

The object of the invention is to alleviate the problems mentioned above by providing a work booth safety system for an automotive body repair shop including a work booth with electrical sockets, compressed air supply for spray guns, a ventilation system for evacuation of polluted air with wall and roof ventilation outlets and an entrance arranged to be selectively closed or opened by means of a door or drape. The invention is especially characterized in that the work booth is arranged to be selectively configured into three different work modes depending on three corresponding work tasks, namely:
- a first work mode for preparative dent repair work on a car, wherein the entrance is kept open and the electrical sockets and the compressed air supply for spray guns are deactivated and the ventilation air flow is mainly directed in a horizontal direction within the work booth and evacuated through a wall ventilation outlet duct;
- a second work mode for spray application of a body sanding foundation on a car, wherein the entrance is closed and the electrical sockets are kept deactivated whilst the compressed air supply for spray guns is activated and the ventilation air flow is still generally directed in a horizontal direction and evacuated through said wall ventilation outlet duct; and
- a third work mode for welding work on a car, wherein the entrance is closed and the electrical sockets are activated whilst the compressed air supply for spray guns is deactivated and the ventilation air flow is generally directed in a vertical direction from the floor towards the roof of the work booth where it is evacuated through a roof ventilation outlet duct.

In an advantageous embodiment of the invention, the work booth is provided with a control unit coupled to a sensor positioned at the entrance for detecting whether the entrance is open or closed by said door or drape. The control unit is arranged to allow the second and third work modes exclusively on the condition that the entrance is closed.

Suitably, the control unit comprises a work mode setting switch and selectively opens or closes the wall- or roof ventilation outlet ducts depending on the selected work mode so that:
- the wall ventilation outlet duct is open and the roof ventilation outlet duct is closed when the first or second work mode is selected, and
- the roof ventilation outlet duct is open and the wall ventilation outlet duct is closed when the third work mode is selected.

The ventilation system is preferably provided with a final common outlet duct connected to both the wall ventilation outlet duct and the roof ventilation outlet duct. A ventilation fan is then connected to the final common outlet duct.

In a well-functioning embodiment of the invention, the ventilation system is provided with a ventilation inlet duct placed in the roof of the work booth adjacent to the entrance.

Preferably, the roof ventilation outlet duct is provided with multiple inlet openings in the roof of the work booth. Furthermore, the wall ventilation outlet duct is positioned adjacent to the floor of the work booth.

The invention provides an advantage over previously known technology, primarily due to the fact that the work booth safety system prevents the use of flammable gases from the application of a body sanding foundation at the same time as a welding operation.

Furthermore, the work booth safety system according to the invention may be applied in multiple work booths placed next to or near each other and since each work booth has its own ventilation system, they may be used in different work modes simultaneously for cars in different stages of repair within the same workshop.

The ventilated work booth also means a substantial improvement in the work environment for workshop staff not directly involved in the repair work within the booth who otherwise would have breathed in potentially health-endangering welding fumes or fumes from the spray application of the sanding foundation. The work booth is also sound insulated so that staff outside the work booth experiences a quieter work environment.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.
- Fig. 1: shows a schematic view of the work booth safety system set to a first work mode for preparative dent repair work on a car according to the present invention;
- Fig. 2: shows a schematic view of the work booth safety system set to second work mode for spray application of a body sanding foundation on the car a second work mode for spray application of a body sanding foundation on a car, and
- Fig. 3: finally shows a schematic view of the work booth safety system set to a third work mode for welding work on a car.

### DETAILED DESCRIPTION OF EXAMPLE EMBODIMENTS OF THE INVENTION

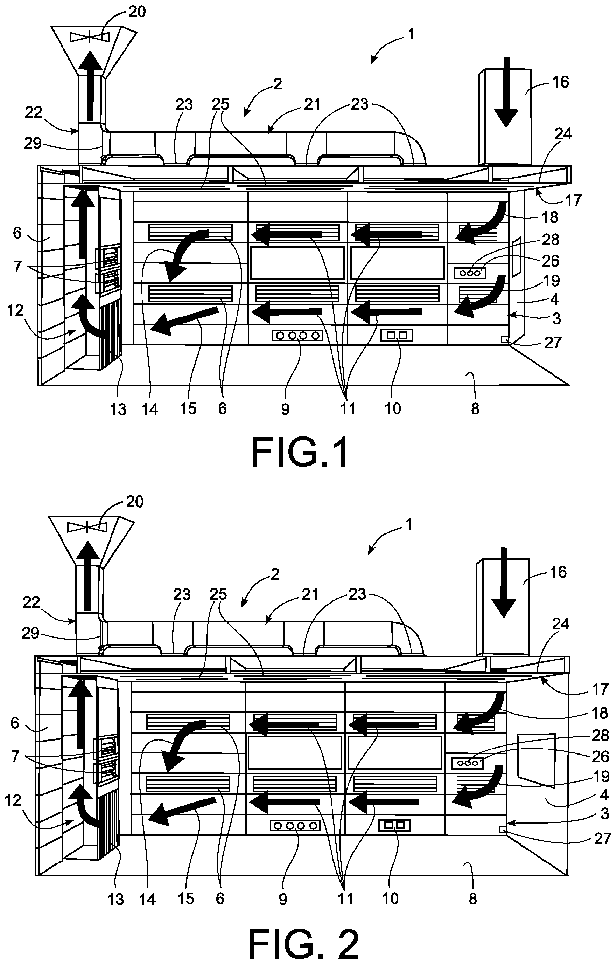

The invention will now be described with reference to embodiments of the invention and with reference to the appended drawings. With initial reference to Fig. 1, this figure shows a schematic overview of a work booth safety system for an automotive body repair shop including a work booth 1 with a ventilation system 2 for evacuation of polluted air including welding fumes, spray paint fumes and grinding dust from grinding or sanding work on a car body (not shown). The work booth 1 is provided with an entrance 3 which is arranged to be selectively closed or opened by means of a door 4, shown in an open position in Fig. 1. The entrance 3 may alternatively be provided with a drape (not shown).

Furthermore, the work booth 1 is generally rectangular in shape and has sound insulated side walls 5 and an end wall 6 positioned opposite to the entrance 3. The side wall 5 and the end wall 6 are provided with multiple light armatures 6, 7 at two height levels from the floor 8. The light armatures 6, 7 are approved for use in areas with potential explosion risk due to flammable gases and are directed towards the typical work area on a car (not shown) centrally placed in the work booth 1. Electrical sockets 9 and a compressed air supply panel 10 are provided in the side walls 5 and are arranged to be activated or deactivated depending on three different work modes depending on three corresponding work tasks.

A first work mode for preparative dent repair work on a car (not shown) is shown in Fig. 1, wherein the entrance 3 is kept open and the electrical sockets 9 and compressed air supply panel 10 for spray guns (not shown) are deactivated. In this first work mode, the ventilation air flow as indicated by the arrows 11 is mainly directed in a horizontal direction within the work booth 1 and evacuated through a wall ventilation outlet duct 12 via a slotted inlet panel 13 in the end wall 6. The wall ventilation outlet duct 12 is positioned adjacent to the floor 8 of the work booth 1 so that the ventilation air flow is forced downwardly towards the floor 8 as indicated by arrows 14, 15 just before exiting the work booth 1. A ventilation inlet duct 16 is positioned in the roof of the work booth 1 adjacent to - and above the entrance 3. Hence, the ventilation air flow is initially directed vertically downwards from the roof 17 but is then turned in a horizontal direction according to the curved arrows 18, 19. A ventilation fan 20 is arranged to draw air by suction through the wall ventilation outlet duct 12 - and in a third work mode to be described below - through a roof ventilation outlet duct 21. The ventilation fan 20 is connected to both the wall ventilation outlet duct 12 and the roof ventilation outlet duct 21 via a final ventilation outlet duct 22. As seen in Fig. 1, the roof ventilation outlet duct 21 is provided with multiple inlet openings in the roof 17 of the work booth 1. The roof 17 is formed as a two-layered structure with an inner ceiling sheet layer 24 provided with a multiplicity of ventilation slots 25. The ventilation slots 25may alternatively be shaped as a perforated ventilation grid (not shown).

In Fig. 2, a second work mode for spray application of a body sanding foundation on a car is shown. Here, the entrance 3 is closed and electrical sockets 9 are kept deactivated whilst the compressed air supply 10 for spray guns is activated and the ventilation air flow is still generally directed in a horizontal direction of the arrows 11 and evacuated through said wall ventilation outlet duct 12 in the same manner as in the previously described first work mode.

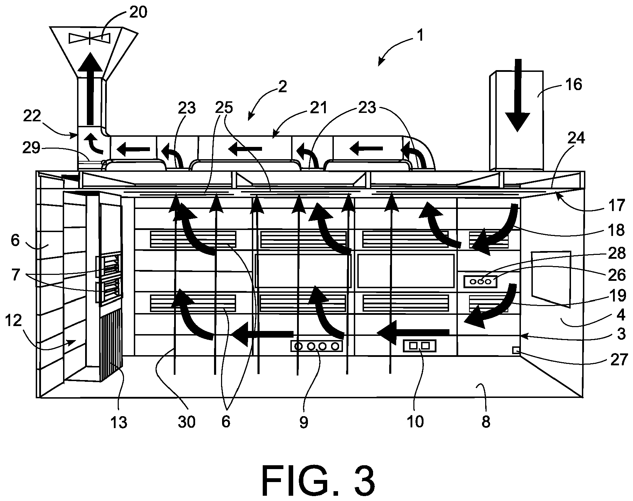

In Fig. 3, a third work mode for welding work on a car is shown. Here, the entrance 3 is closed and electrical sockets 9 are activated whilst the compressed air supply 10 for spray guns is deactivated. The ventilation airflow is now generally directed in a vertical direction from the floor 8 towards the roof 17 of the work booth 1 where it is evacuated through the roof ventilation outlet duct 21. This ventilation direction offers the most efficient way to evacuate the hot welding fumes that move upwardly because of their heat according to the vertical arrows 30 in the figure.

The work booth 1 is provided with a control unit 26 coupled to a sensor 27 positioned at the entrance 3 for detecting whether the entrance 3 is open or closed by said door or drape 4. The control unit 26 is arranged to allow the second and third work modes exclusively on the condition that the entrance 3 is closed. The control unit 26 comprises a work mode setting switch 28 and selectively opens or closes the wall- or roof ventilation outlet ducts 12, 21 depending on the selected work mode so that:
- the wall ventilation outlet duct 12 is open and the roof ventilation outlet duct 21 is closed when the first or second work mode is selected, and
- the roof ventilation outlet duct 21 is open and the wall ventilation outlet duct 12 is closed when the third work mode is selected.

For this purpose, the wall- or roof ventilation outlet ducts 12, 21 may be selectively opened or shut by means of a valve 29 positioned in the final common ventilation duct 22 which is controlled by the control unit 26. In Figs 1 and 2, the valve 22 is set to allow suction through the wall ventilation outlet 12, whereas in Fig. 3, the valve 29 is set to allow suction through the roof ventilation outlet duct 21. In an alternative embodiment of the invention, the wall- or roof ventilation outlet ducts 12, 21 may each be provided with a valve (not shown).

It is to be understood that the present invention is not limited to the embodiments described above and illustrated in the drawings and a skilled person will recognize that many changes and modifications may be made within the scope of the appended claims.

## Claims

1. Work booth safety system for an automotive body repair shop, the work booth safety system including a work booth (1) with electrical sockets (9), compressed air supply (10) for spray guns, a ventilation system (2) for evacuation of polluted air with wall and roof ventilation outlets and an entrance arranged to be selectively closed or opened by means of a door or drape (4), **characterized in that** the work booth (1) is arranged to be selectively configured into three different work modes depending on three corresponding work tasks, namely:
- a first work mode for preparative dent repair work on a car, wherein the entrance (3) is kept open and the electrical sockets (9) and the compressed air supply (10) for spray guns are deactivated and the ventilation air flow is mainly directed in a horizontal direction within the work booth (1) and evacuated through a wall ventilation outlet duct (12);
- a second work mode for spray application of a body sanding foundation on a car, wherein the entrance (3) is closed and the electrical sockets (9) are kept deactivated whilst the compressed air supply (10) for spray guns is activated and the ventilation air flow is still generally directed in a horizontal direction and evacuated through said wall ventilation outlet duct (12); and
- a third work mode for welding work on a car, wherein the entrance (3) is closed and the electrical sockets (9) are activated whilst the compressed air supply (10) for spray guns is deactivated and the ventilation air flow is generally directed in a vertical direction from the floor (8) towards the roof (17) of the work booth (1) where it is evacuated through a roof ventilation outlet duct (21).

2. Work booth safety system for an automotive body repair shop according to claim 1, **characterized in that** the work booth (1) is provided with a control unit (26) coupled to a sensor (27) positioned at the entrance for detecting whether the entrance (3) is open or closed by said door or drape (4), said control unit (26) being arranged to allow the second and third work modes exclusively on the condition that the entrance (3) is closed.

3. Work booth safety system for an automotive body repair shop according to claim 2, **characterized in that** the control unit (26) comprises a work mode setting switch and selectively opens or closes the wall- or roof ventilation outlet ducts (12, 21) depending on the selected work mode so that:
- the wall ventilation outlet duct (12) is open and the roof ventilation outlet duct (21) is closed when the first or second work mode is selected, and
- the roof ventilation outlet duct (21) is open and the wall ventilation outlet duct (12) is closed when the third work mode is selected.

4. Work booth safety system for an automotive body repair shop according to any of the preceding claims, **characterized in that** the ventilation system (2) is provided with a final common outlet duct (22) connected to both the wall ventilation outlet duct (12) and the roof ventilation outlet duct (21).

5. Work booth safety system for an automotive body repair shop according to claim 4, **characterized in that** a ventilation fan is connected to the final common outlet duct (22).

6. Work booth safety system for an automotive body repair shop according to any of the preceding claims, **characterized in that** the ventilation system is provided with a ventilation inlet duct (16) placed in the roof (17) of the work booth (1) adjacent to the entrance (3).

7. Work booth safety system for an automotive body repair shop according to any of the preceding claims, **characterized in that** the roof ventilation outlet duct (21) is provided with multiple inlet openings (23) in the roof of the work booth (1).

8. Work booth safety system for an automotive body repair shop according to any of the preceding claims, **characterized in that** the wall ventilation outlet duct (12) is positioned adjacent to the floor (8) of the work booth (1).

## Patentansprüche

1. Arbeitskabinensicherheitssystem für eine Automobilkarosseriereparaturwerkstatt, wobei das Arbeitskabinensicherheitssystem eine Arbeitskabine (1) einschließt mit
elektrischen Steckdosen (9), einer Druckluftzufuhr (10) für Spritzpistolen, einem Belüftungssystem (2) zum Abführen von verunreinigter Luft mit Wand- und Dachbelüftungsauslässen und einem Eingang, der so angeordnet ist, dass er mittels einer Tür oder eines Vorhangs (4) selektiv geschlossen oder geöffnet werden kann, **dadurch gekennzeichnet, dass** die Arbeitskabine (1) so angeordnet ist, dass sie selektiv in drei verschiedene Arbeitsmodi konfiguriert werden kann, abhängig von drei entsprechenden Arbeitsaufgaben, nämlich:
- einem ersten Arbeitsmodus für vorbereitende Beulenreparaturarbeiten an einem Auto, wobei der Eingang (3) offen gehalten wird und die elektrischen Steckdosen (9) und die Druckluftzufuhr (10) für Spritzpistolen deaktiviert werden und der Belüftungsluftstrom innerhalb der Arbeitskabine (1) hauptsächlich in horizontaler Richtung gelenkt und durch einen Wandbelüftungsauslasskanal (12) abgeführt wird;
- einem zweiten Arbeitsmodus für das Spritzauftragen eines Karosserieschleifgrundes auf ein Auto, wobei der Eingang (3) geschlossen ist und die elektrischen Steckdosen (9) deaktiviert bleiben, während die Druckluftzufuhr (10) für Spritzpistolen aktiviert ist und der Belüftungsluftstrom noch im Allgemeinen in horizontaler Richtung gelenkt und durch den Wandbelüftungsauslasskanal (12) abgeführt wird; und
- einem dritten Arbeitsmodus für Schweißarbeiten an einem Auto, wobei der Eingang (3) geschlossen ist und die elektrischen Steckdosen (9) aktiviert sind, während die Druckluftzufuhr (10) für Spritzpistolen deaktiviert ist und der Belüftungsluftstrom im Allgemeinen in vertikaler Richtung vom Boden (8) in Richtung des Dachs (17) der Arbeitskabine (1) gelenkt wird, wo er durch einen Dachbelüftungsauslasskanal (21) abgeführt wird.

2. Arbeitskabinensicherheitssystem für eine Automobilkarosseriereparaturwerkstatt nach Anspruch 1, **dadurch gekennzeichnet, dass** die Arbeitskabine (1) mit einer Steuereinheit (26) versehen ist, die mit einem Sensor (27) gekoppelt ist, der am Eingang positioniert ist, um zu erfassen, ob der Eingang (3) durch die Tür oder den Vorhang (4) offen oder geschlossen ist, wobei die Steuereinheit (26) so angeordnet ist, dass sie den zweiten und dritten Arbeitsmodus ausschließlich unter der Bedingung ermöglicht, dass der Eingang (3) geschlossen ist.

3. Arbeitskabinensicherheitssystem für eine Automobilkarosseriereparaturwerkstatt nach Anspruch 2, **dadurch gekennzeichnet, dass** die Steuereinheit (26) einen Einstellschalter für den Arbeitsmodus umfasst und selektiv die Wand- oder Dachlüftungsauslasskanäle (12, 21) abhängig von dem gewählten Arbeitsmodus öffnet oder schließt, so dass:
- der Wandbelüftungsauslasskanal (12) offen und der Dachbelüftungsauslasskanal (21) geschlossen ist, wenn der erste oder zweite Arbeitsmodus ausgewählt ist, und
- der Dachbelüftungsauslasskanal (21) offen ist und der Wandbelüftungsauslasskanal (12) geschlossen ist, wenn der dritte Arbeitsmodus ausgewählt ist.

4. Arbeitskabinensicherheitssystem für eine Automobilkarosseriereparaturwerkstatt nach einem der vorstehenden Ansprüche, **dadurch gekennzeichnet, dass** das Belüftungssystem (2) mit einem letzten gemeinsamen Auslasskanal (22) versehen ist, der sowohl mit dem Wandbelüftungsauslasskanal (12) als auch mit dem Dachbelüftungsauslasskanal (21) verbunden ist.

5. Arbeitskabinensicherheitssystem für eine Automobilkarosseriereparaturwerkstatt nach Anspruch 4, **dadurch gekennzeichnet, dass** ein Lüftungsgebläse mit dem letzten gemeinsamen Auslasskanal (22) verbunden ist.

6. Arbeitskabinensicherheitssystem für eine Automobilkarosseriereparaturwerkstatt nach einem der vorstehenden Ansprüche, **dadurch gekennzeichnet, dass** das Belüftungssystem mit einem Belüftungseinlasskanal (16) versehen ist, der im Dach (17) der Arbeitskabine (1) angrenzend an den Eingang (3) angeordnet ist.

7. Arbeitskabinensicherheitssystem für eine Automobilkarosseriereparaturwerkstatt nach einem der vorstehenden Ansprüche, **dadurch gekennzeichnet, dass** der Dachbelüftungsauslasskanal (21) mit mehreren Einlassöffnungen (23) im Dach der Arbeitskabine (1) versehen ist.

8. Arbeitskabinensicherheitssystem für eine Automobilkarosseriereparaturwerkstatt nach einem der vorstehenden Ansprüche, **dadurch gekennzeichnet, dass** der Wandbelüftungsauslasskanal (12) angrenzend an den Boden (8) der Arbeitskabine (1) angeordnet ist.

## Revendications

1. Système de sécurité de cabine de travail pour un atelier de réparation de carrosserie automobile, le système de sécurité de cabine de travail incluant une cabine de travail (1) avec
des prises électriques (9), une alimentation en air comprimé (10) pour pistolets de pulvérisation, un système de ventilation (2) pour l'évacuation d'air pollué avec des sorties de ventilation de mur et de toit et une entrée agencée pour être fermée ou ouverte sélectivement au moyen d'une porte ou d'un rideau (4), **caractérisé en ce que** la cabine de travail (1) est agencée pour être configurée sélectivement dans trois modes de travail différents en fonction de trois tâches de travail correspondantes, à savoir :
- un premier mode de travail pour un travail préparatoire de débosselage sur une voiture, dans lequel l'entrée (3) est maintenue ouverte et les prises électriques (9) et l'alimentation en air comprimé (10) pour pistolets de pulvérisation sont désactivées et le flux d'air de ventilation est principalement dirigé dans une direction horizontale à l'intérieur de la cabine de travail (1) et évacué à travers un conduit de sortie de ventilation de mur (12) ;
- un deuxième mode de travail pour l'application par pulvérisation d'une base de sablage de carrosserie sur une voiture, dans lequel l'entrée (3) est fermée et les prises électriques (9) sont maintenues désactivées tandis que l'alimentation en air comprimé (10) pour pistolets de pulvérisation est activée et que le flux d'air de ventilation est toujours dirigé généralement dans une direction horizontale et évacué à travers ledit conduit de sortie de ventilation de mur (12) ; et
- un troisième mode de travail pour un travail de soudage sur une voiture, dans lequel l'entrée (3) est fermée et les prises électriques (9) sont activées tandis que l'alimentation en air comprimé (10) pour pistolets de pulvérisation est désactivée et que le flux d'air de ventilation est généralement dirigé dans une direction verticale par rapport au sol (8) en direction du toit (17) de la cabine de travail (1) où il est évacué à travers un conduit de sortie de ventilation de toit (21).

2. Système de sécurité de cabine de travail pour un atelier de réparation de carrosserie automobile selon la revendication 1, **caractérisé en ce que** la cabine de travail (1) est pourvue d'une unité de commande (26) couplée à un capteur (27) positionné au niveau de l'entrée pour détecter si l'entrée (3) est ouverte ou fermée par ladite porte ou ledit rideau (4), ladite unité de commande (26) étant agencée pour permettre les deuxième et troisième modes de travail exclusivement à la condition que l'entrée (3) soit fermée.

3. Système de sécurité de cabine de travail pour un atelier de réparation de carrosserie automobile selon la revendication 2, **caractérisé en ce que** l'unité de commande (26) comprend un commutateur de réglage de mode de travail et ouvre ou ferme sélectivement les conduits de sortie de ventilation de mur ou de toit (12, 21) en fonction du mode de travail sélectionné de sorte que :
- le conduit de sortie de ventilation de mur (12) est ouvert et le conduit de sortie de ventilation de toit (21) est fermé lorsque le premier ou deuxième mode de travail est sélectionné, et
- le conduit de sortie de ventilation de toit (21) est ouvert et le conduit de sortie de ventilation de mur (12) est fermé lorsque le troisième mode de travail est sélectionné.

4. Système de sécurité de cabine de travail pour un atelier de réparation de carrosserie automobile selon l'une quelconque des revendications précédentes, **caractérisé en ce que** le système de ventilation (2) est pourvu d'un conduit de sortie commun final (22) relié à la fois au conduit de sortie de ventilation de mur (12) et au conduit de sortie de ventilation de toit (21).

5. Système de sécurité de cabine de travail pour un atelier de réparation de carrosserie automobile selon la revendication 4, **caractérisé en ce qu'**un ventilateur de ventilation est relié au conduit de sortie commun final (22).

6. Système de sécurité de cabine de travail pour un atelier de réparation de carrosserie automobile selon l'une quelconque des revendications précédentes, **caractérisé en ce que** le système de ventilation est pourvu d'un conduit d'entrée de ventilation (16) placé dans le toit (17) de la cabine de travail (1) adjacent à l'entrée (3).

7. Système de sécurité de cabine de travail pour un atelier de réparation de carrosserie automobile selon l'une quelconque des revendications précédentes, **caractérisé en ce que** le conduit de sortie de ventilation de toit (21) est pourvu de multiples ouvertures d'entrée (23) dans le toit de la cabine de travail (1).

8. Système de sécurité de cabine de travail pour un atelier de réparation de carrosserie automobile selon l'une quelconque des revendications précédentes, **caractérisé en ce que** le conduit de sortie de ventilation de mur (12) est positionné adjacent au sol (8) de la cabine de travail (1).
